# EUROPÄISCHE PATENTSCHRIFT

(11) **EP 3 259 500 B1**
(45) Veröffentlichungstag und Bekanntmachung des Hinweises auf die Patenterteilung: **12.12.2018**
(21) Anmeldenummer: 16701131.1
(22) Anmeldetag: 20.01.2016
(51) Int. Cl.: F16H 3/089

(54) **DOPPELKUPPLUNGSGETRIEBE FÜR EIN KRAFTFAHRZEUG**
DUAL CLUTCH TRANSMISSION FOR A MOTOR VEHICLE
BOÎTE DE VITESSES À DOUBLE EMBRAYAGE POUR VÉHICULE À MOTEUR

(30) Priorität: 19.02.2015 DE 102015002134
(43) Veröffentlichungstag der Anmeldung: 27.12.2017
(73) Patentinhaber: Audi AG, 85045 Ingolstadt (DE)
(72) Erfinder: HUMMEL, Steffen, 85055 Ingolstadt (DE)
(86) Internationale Anmeldenummer: PCT/EP2016/051108
(87) Internationale Veröffentlichungsnummer: WO 2016/131593

(56) Entgegenhaltungen:
- WO-A2-99/33682
- DE-A1-102011 089 167
- DE-A1-102012 004 096
- DE-A1-102012 013 248
- DE-A1-102012 219 437

## Beschreibung

Die vorliegende Erfindung betrifft ein Doppelkupplungsgetriebe für ein Kraftfahrzeug gemäß dem Oberbegriff des Patentanspruchs 1.

Derartige Doppelkupplungsgetriebe haben neben einem guten Wirkungsgrad unter anderem den Vorteil, dass sie ohne Unterbrechung der Zugkraft insbesondere automatisiert schaltbar sind, wobei im jeweils nicht aktivierten Teilgetriebe bereits eine Gangstufe vorwählbar ist, die dann durch Wechsel der lastschaltbaren Kupplungen aktiviert wird. Dabei sind im einen Teilgetriebe die ungeraden Gänge (1, 3, 5, etc.) und im anderen Teilgetriebe die geraden Gänge (2, 4, 6, etc.) mittels entsprechender Zahnradsätze positioniert, die zum Beispiel über Synchronkupplungen mit der jeweiligen Eingangswelle oder der Abtriebswelle trieblich verbunden werden.

Die Axiallänge des Doppelkupplungsgetriebes hängt von der Anzahl von Zahnradsätzen oder Radebenen ab, die in der Axialrichtung hintereinander im Doppelkupplungsgetriebe angeordnet sind. Jede der Radebenen ist aus zumindest zwei Fest- und/oder Loszahnräder aufgebaut. Zwischen den Radebenen sind Schaltelemente angeordnet, bei deren Betätigung Vor- und Rückwärtsgänge schaltbar sind.

Ein Doppelkupplungsgetriebe weist über Schaltelemente schaltbare Zahnradsätzen auf, die insbesondere genau acht Radebenen bilden. Die Radebenen sind jeweils einem ersten Teilgetriebe und einem zweiten Teilgetriebe zugeordnet. Jedes der Teilgetriebe weist je eine Eingangswelle sowie eine gemeinsame Abtriebswelle auf. Die zueinander koaxialen Eingangswellen sind über je eine lastschaltbare Kupplung alternierend aktivierbar, wobei dem ersten Teilgetriebe die geraden Vorwärtsgänge sowie dem zweiten Teilgetriebe die ungeraden Vorwärtsgänge zugeordnet sind, die bei einer Gangschaltung über die Schaltelement schaltbar sind. Das Doppelkupplungsgetriebe weist zudem eine Zwischen-Radebene auf, die entweder auf das erste Teilgetriebe oder auf das zweite Teilgetriebe schaltbar ist.

Aus der DE 10 2012 004 096 A1 ist ein Doppelkupplungsgetriebe bekannt, bei dem ein Rückwärtsganges durch zwei auf einer gemeinsamen Rückwärtsgangwelle angeordnete Umkehrzahnräder gebildet wird.

Aus der DE 10 2012 219 437 A1 ist ein Getriebe mit einer ersten Eingangswelle und einer zweiten Eingangswelle bekannt, welches unter den Wortlaut des Oberbegriffes des Anspruches 1 fällt. Aus der DE 10 2012 004 096 A1 ist eine Schaltvorrichtung für ein Geschwindigkeits-Wechselgetriebe bekannt. Aus der DE 10 2011 089 167 A1 ist ein Doppelkupplungsgetriebe in Vorgelegebauweise bekannt. Aus der WO 99/33682 A2 ist ein weiteres Getriebe bekannt.

Die Aufgabe der Erfindung besteht darin, ein Doppelkupplungsgetriebe bereitzustellen, das bei einer baulich günstigen Konstruktion größere Freiheitsgrade in der Funktionalität (Schaltstrategie) und in der Auslegung der Gangstufen aufweist.

Die Aufgabe ist durch die Merkmale des Patentanspruchs 1 gelöst. Besonders vorteilhafte Weiterbildungen und Ausgestaltungen der Erfindung sind Gegenstand der abhängigen Ansprüche.

Gemäß dem kennzeichnenden Teil des Patentanspruches 1 sind zur Bildung eines Rückwärtsgangs zwei auf einer gemeinsamen Rückwärtsgangwelle angeordnete Umkehrzahnräder vorgesehen. Das erste Umkehrzahnrad ist mit einer Radebene eines der Teilgetriebe kuppelbar, während das zweite Umkehrzahnrad mit der Zwischen-Radebene kuppelbar ist. Bei geschalteten Rückwärtsgang ist ein Momentenfluß von der Radebene des aktivierten Teilgetriebes über das erste Umkehrzahnrad, die Rückwärtsgangwelle und das zweite Umkehrzahnrad auf die Zwischen-Radebene und weiter auf die Abtriebswelle übertragbar.

Auf diese Weise kann einen separaten Rückwärtsgang-Zahnradsatz oder - Radebene mit nur einem Umkehrzahnrad entfallen. Anstelle dessen werden zwei ohnehin bereitgestellte Radebenen trieblich über die Rückwärtsgangwelle und die zwei Umkehrzahnräder miteinander verbunden, und zwar so, dass neben den regulären Vorwärtsgängen auch der Rückwärtsgang realisierbar ist. Durch den Entfall eines separaten Rückwärtsgang-Zahnradsatzes ist entweder die Getriebe-Baulänge verkürzbar oder an dieser Stelle ein weiterer Vorwärtsgang bereitstellbar.

In einer technischen Umsetzung kann das erste Umkehrzahnrad als ein Loszahnrad auf der Rückwärtsgangwelle drehgelagert sein und mit einem Rückwärtsgang-Schaltelement (SE-H) mit der Rückwärtsgangwelle kuppelbar sein. Das zweite Umkehrzahnrad kann als ein Festzahnrad auf der Rückwärtsgangwelle drehfest angeordnet sein.

Im Hinblick auf eine einfache triebliche Verbindung mit den Radebenen kämmt das erste Umkehrzahnrad mit einem auf der ersten Eingangswelle gelagerten antriebsseitigen Zahnrad der Radebene (RE-2) des ersten Teilgetriebes, während das zweite Umkehrzahnrad mit einem, auf der Abtriebswelle gelagerten abtriebsseitigen Zahnrad der Zwischen-Radebene kämmt.

Das antriebsseitige Zahnrad der Radebene (RE-2) ist drehfest auf einer antriebsseitigen Hohlwelle des ersten Teilgetriebes angeordnet. Die antriebsseitige Hohlwelle des ersten Teilgetriebes ist koaxial auf der ersten Eingangswelle drehgelagert und über ein erstes Schaltelement (SE-C) mit der ersten Eingangswelle verbindbar.

Das abtriebsseitige Zahnrad der Zwischen-Radebene ist als ein Loszahnrad auf der Abtriebswelle gelagert ist und über ein siebtes Schaltelement (SE-G) trieblich mit der Abtriebswelle kuppelbar ist. In diesem Fall ist durch Schalten der ersten und siebten Schaltelemente (SE-C, SE-G) und des Rückwärtsgang-Schaltelements (SE-H) der Rückwärtsgang gebildet.

Die Zwischen-Radebene kann in der Axialrichtung unmittelbar an das erste Teilgetriebe angrenzen. In diesem Fall kann die Zwischen-Radebene mittels eines dritten Schaltelementes (SE-D) entweder mit dem ersten Teilgetriebe oder mittels eines vierten Schaltelementes (SE-B) mit dem zweiten Teilgetriebe kuppelbar sein.

Alternativ und/oder zusätzlich zu den obigen Erfindungsaspekten kann die auf die beiden Teilgetriebe schaltbare Zwischen-Radebene mit ihrem antriebsseitigen Zahnrad auf der zweiten Eingangswelle lose gelagert sein und mittels des oben erwähnten dritten Schaltelementes (SE-D) mit der antriebsseitigen Hohlwelle des ersten Teilgetriebes kuppelbar sein. In Axialrichtung gegenüber dem dritten Schaltelement (SE-D) kann das antriebsseitige Zahnrad der Zwischen-Radebene mit dem vierten Schaltelement (SE-B) mit dem zweiten Teilgetriebe kuppelbar sein.

In einer technischen Realisierung weist die erste Eingangswelle mit dem oben erwähnten ersten Schaltelement (SE-C) genau ein, in Axialrichtung beidseitig schaltbares Schaltelement (zum Beispiel eine Doppelsynchronkupplung) auf. Mittels des ersten Schaltelements (SE-C) wird die erste Eingangswelle mit den Radebenen des ersten Teilgetriebes gekuppelt oder davon abgekuppelt. Entsprechend kann auch die zweite Eingangswelle genau ein, in Axialrichtung beidseitig schaltbares zweites Schaltelement (SE-A) (zum Beispiel eine Doppelsynchronkupplung) aufweisen, mit dem die zweite Eingangswelle mit den Radebenen des zweiten Teilgetriebes kuppelbar ist.

Mittels des im ersten Teilgetriebe angeordneten ersten Schaltelements (SE-C) kann entweder ein auf ein, auf der ersten Eingangswelle gelagertes antriebsseitiges Loszahnrad einer ersten Radebene oder die bereits erwähnte antriebsseitige Hohlwelle des ersten Teilgetriebes mit der ersten Eingangswelle gekuppelt werden. Die auf der ersten Eingangswelle drehgelagerte antriebsseitige Hohlwelle kann zwei antriebsseitige Festzahnräder tragen, die jeweils einer zweiten Radebene und einer dritten Radebene zugeordnet sind.

Zudem kann auf der antriebsseitigen Hohlwelle des ersten Teilgetriebes zusätzlich ein antriebsseitiges Zahnrad einer vierten Radebene lose gelagert sein. Zur trieblichen Verbindung mit der antriebsseitigen Hohlwelle kann diese das oben erwähnte dritten Schaltelement (SE-D) aufweisen, mit dem das losgelagerte antriebsseitige Zahnrad der vierten Radebene mit der antriebsseitigen Hohlwelle des ersten Teilgetriebes kuppelbar ist.

Das unmittelbar von der zweiten Eingangswelle getragene zweite Schaltelement (SE-A) ist bevorzugt in der Axialrichtung beidseitig schaltbar (zum Beispiel als Doppelsynchronkupplung). In diesem Fall kann in der Axialrichtung des zweiten Schaltelementes im zweiten Teilgetriebe auf der einen Seite des zweiten Schaltelements jeweils ein auf der zweiten Eingangswelle gelagertes antriebsseitiges Loszahnrad einer achten Radebene und auf der anderen Seite des zweiten Schaltelements eine auf der zweiten Eingangswelle koaxial gelagerte antriebsseitige Hohlwelle angeordnet sein. Die antriebsseitige Hohlwelle des zweiten Teilgetriebes und das obige Loszahnrad der achten Radebene können (über das Schaltelement SE-A) alternierend mit der zweiten Eingangswelle kuppelbar sein. Die antriebsseitige Hohlwelle des zweiten Teilgetriebes kann bevorzugt ein antriebsseitiges Festzahnrad der siebten Radebene tragen sowie ein antriebsseitiges Loszahnrad der sechsten Radebene tragen. Zum Schalten des antriebsseitigen Loszahnrads der sechsten Radebene kann die antriebsseitige Hohlwelle des zweiten Teilgetriebes über das vierte Schaltelement (SE-B) mit dem antriebsseitige Loszahnrad der sechsten Radebene kuppelbar ist. In einer bevorzugten Ausführungsvariante kann mittels des vierten Schaltelementes (SE-B) zusätzlich auch das antriebsseitige, losgelagerte Zahnrad der auf beide Teilgetriebe schaltbaren Zwischen-Radebene an die antriebsseitige Hohlwelle des zweiten Teilgetriebes gekuppelt werden.

In einer technischen Realisierung ist die Abtriebswelle achsparallel zu den Eingangswellen und zur Rückwärtsgangwelle angeordnet. Bevorzugt können die abtriebsseitigen Zahnräder der ersten und zweiten Radebene im ersten Teilgetriebe drehfest auf einer abtriebsseitigen Hohlwelle angeordnet sein, die koaxial auf der Abtriebswelle drehbar gelagert ist. Die Abtriebswelle kann zudem ein fünftes Schaltelement (SE-F) aufweisen, mittels dem im ersten Teilgetriebe alternierend die abtriebsseitige Hohlwelle oder ein abtriebsseitiges Zahnrad der dritten Radebene mit der Abtriebswelle kuppelbar ist.

In ähnlicher Weise wie im ersten Teilgetriebe können auch im zweiten Teilgetriebe die abtriebsseitigen Zahnräder der siebten und achten Radebene drehfest auf einer Hohlwelle angeordnet sein, die koaxial auf der Abtriebswelle drehbar gelagert ist. Die im zweiten Teilgetriebe auf der Abtriebswelle drehgelagerte Hohlwelle kann mit Hilfe eines sechsten, einseitigen Schaltelementes (SE-E) mit der Abtriebswelle gekuppelt werden.

In einer Ausführungsvariante kann das abtriebsseitige Zahnrad der auf beide Teilgetriebe schaltbaren Zwischen-Radebene (RE-5) als ein Festzahnrad drehfest auf der Abtriebswelle angeordnet sein. In diesem Fall würde im Fahrbetrieb die Zwischen-Radebene ständig mitdrehen und gegebenenfalls die Drehlager vorzeitig verschleißen. Vor diesem Hintergrund kann das abtriebsseitige Zahnrad der fünften Radebene auch lose auf der Abtriebswelle gelagert sein und über ein siebtes Schaltelement (SE-G) an die Abtriebswelle kuppelbar sein.

Bevorzugt kann die Zwischen-Radebene oder der Zwischen-Zahnradsatz (RE-5) zumindest den 3. Vorwärtsgang des Teilgetriebes bilden, der mittel- oder unmittelbar wahlweise mit der Eingangswelle des einen oder des anderen Teilgetriebes (A, B) trieblich verbindbar ist. Daraus resultiert neben der regulären Schaltstrategie eine Variante, in der vom 1. Gang in den 3. Gang und bei Bedarf von diesem in den 5. Gang zugkraftunterbrechungsfrei geschaltet werden kann.

Ist bei einer entsprechenden, getriebetechnischen Auslegung der Zwischen-Zahnradsatz auch in den Leistungsfluss des 1. Vorwärtsganges eingebunden, so kann auch hier das Teilgetriebe gewechselt werden, woraus ein zusätzlicher Freiheitsgrad in der Funktionalität geschaffen ist.

Schließlich können bei möglichst geringem, getriebetechnischen Aufwand die zwölf Vorwärtsgänge mittels fünf Doppelkupplungen und einer Einfachkupplung schaltbar sein, wobei vier Doppelkupplungen auf den koaxial angeordneten beiden Eingangswellen der Teilgetriebe und eine Doppelkupplung sowie eine Einfachkupplung auf der gemeinsamen Abtriebswelle positioniert sind.

Ein Ausführungsbeispiel der Erfindung ist im Folgenden anhand der beigefügten Zeichnung näher beschrieben. Es zeigen:
- Fig. 1: als Blockschaltbild ein Geschwindigkeits-Wechselgetriebe für Kraftfahrzeuge mit zwei Teilgetrieben, die über zwei lastschaltbare Kupplungen aktivierbar sind und mit 12 schaltbaren Vorwärtsgängen, wobei ein Zahnradsatz des Getriebes für beide Teilgetriebe nutzbar ist; und
- Fig. 2: eine Schaltmatrix des Wechselgetriebes nach Fig. 1.

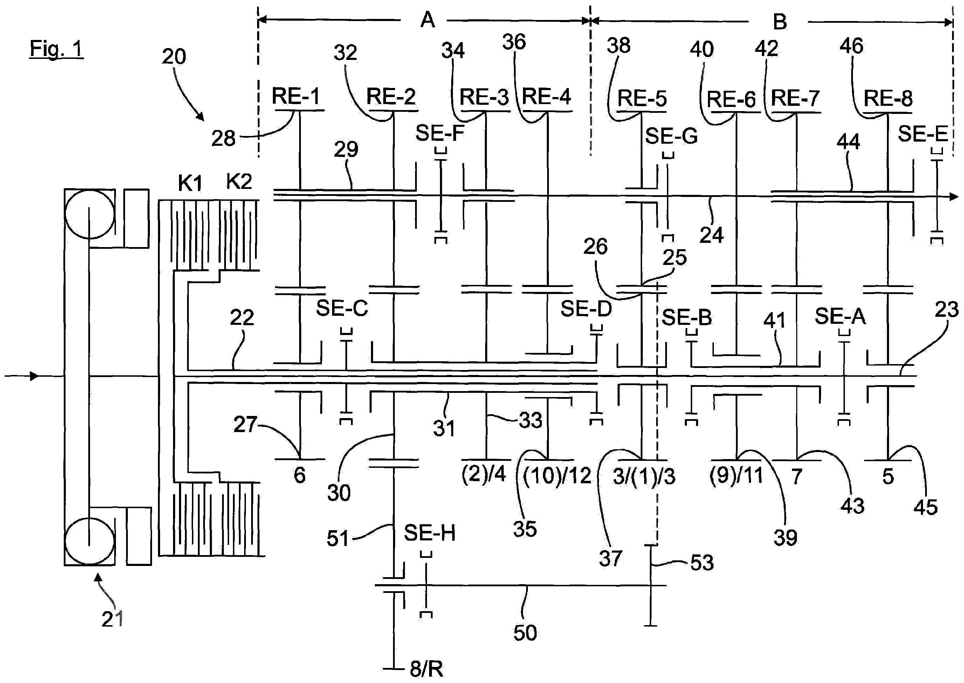

Die Fig. 1 zeigt ein Geschwindigkeits-Wechselgetriebe bzw. ein Doppelkupplungsgetriebe 20 für ein Kraftfahrzeug, mittels dem in acht Radebenen bzw. mit acht Zahnradsätzen RE-1 bis RE-8 bis zu zwölf Vorwärtsgänge 1 bis 12 schaltbar sind. Jede der Radebenen RE-1 bis RE-8 ist aus einem zur Eingangswelle 22, 23 koaxialen antriebsseitigen Zahnrad und einem zur Abtriebswelle 24 koaxialen abtriebsseitigen Zahnrad aufgebaut.

Das Wechselgetriebe 20 weist zwei zum Beispiel mit einer Brennkraftmaschine (nicht dargestellt) und einem Drehschwingungsdämpfer 21 trieblich verbundene und über zwei lastschaltbare Kupplungen K1, K2 alternierend kuppelbare Eingangswellen 22, 23 auf, von denen die Eingangswelle 22 eine Hohlwelle ist, durch die hindurch die zweite Eingangswelle 23 geführt ist. Die Drehlagerung und das korrespondierende Getriebegehäuse sind nicht dargestellt.

Die Zahnradsätze oder Radebenen RE-1 bis RE-8 sind in an sich bekannter Weise durch schaltbare Loszahnräder und durch Festzahnräder auf den Eingangswellen 22, 23 und auf einer gemeinsamen Abtriebswelle 24 in noch zu beschreibender Weise angeordnet, wobei die Zahnradsätze RE-1 bis RE-4 ein erstes Teilgetriebe A und die Zahnradsätze RE-5 bis RE-8 ein zweites Teilgetriebe B bilden.

Der Zahnradsatz RE-5 des Teilgetriebes B ist mit einem Festzahnrad 38 auf der Abtriebswelle 24 und einem schaltbaren Loszahnrad 26 auf der Eingangswelle 23 axial unmittelbar benachbart dem Teilgetriebe A derart angeordnet, dass dessen Loszahnrad 27 über eine Schaltkupplung SE-D entweder mit dem Teilgetriebe A oder über eine Schaltkupplung SE-B dem Teilgetriebe B kuppelbar ist.

Die Anordnung der übrigen Zahnradsätze ist derart, dass bei nur acht Zahnradsätzen RE-1 bis RE-8 die 12 Vorwärtsgänge realisierbar sind, wobei:
- das Loszahnrad 27 von RE-1 auf der Eingangswelle 22 und dessen Festzahnrad 28 auf einer koaxial zur Abtriebswelle 24 gelagerten Hohlwelle 29 drehfest angeordnet ist;
- ein Festzahnrad 30 von RE-2 über eine Hohlwelle 31 auf der Eingangswelle 22 gelagert und das korrespondierende Festzahnrad 32 ebenfalls auf der Hohlwelle 29 drehfest angeordnet ist;
- das Loszahnrad 27 und die Hohlwelle 31 mittels einer Schaltkupplung SE-C alternierend mit der Eingangswelle 22 kuppelbar sind;
- ein Festzahnrad 33 von RE-3 auf der Hohlwelle 31 angeordnet ist, während dessen Loszahnrad 34 oder die Hohlwelle 29 alternierend über eine Schaltkupplung SE-F mit der Abtriebswelle 24 kuppelbar sind;
- auf der Hohlwelle 31 ist ferner ein Loszahnrad 35 des Zahnradsatzes RE-4 gelagert, das mit einem Festzahnrad 36 auf der Abtriebswelle 24 kämmt;
- unmittelbar axial benachbart zum Loszahnrad 35 des Zahnradsatzes RE-4 ist das Loszahnrad 37 des Zahnradsatzes RE-5 auf der zentralen Eingangswelle 23 des Teilgetriebes B gelagert, das mit dem weiteren Festzahnrad 38 auf der Abtriebswelle 24 in Eingriff ist;
- die beiden Loszahnräder 35, 37 sind über eine weitere Schaltkupplung SE-D alternierend mit der Hohlwelle 31 auf der Eingangswelle 22 kuppelbar;
- zudem ist das Loszahnrad 37 über eine zweite Schaltkupplung SE-B mit einer auf der Eingangswelle 23 gelagerten Hohlwelle 41 kuppelbar, wobei die Hohlwelle 41 ein Loszahnrad 39 des Zahnradsatzes RE-6 trägt, das ebenfalls über die Schaltkupplung SE-B an die Hohlwelle 41 kuppelbar ist;
- das Loszahnrad 39 des Zahnradsatzes RE-6 kämmt mit einem weiteren Festzahnrad 40 auf der Abtriebswelle 24;
- die Hohlwelle 41 weist ferner ein Festzahnrad 43 des Zahnradsatzes RE-7 auf, das mit einem Festzahnrad 42 auf einer auf der Abtriebswelle 24 drehbar gelagerten Hohlwelle 44 in Eingriff ist;
- die Hohlwelle 41 auf der Eingangswelle 23 kann ferner über eine Schaltkupplung SE-A mit der Eingangswelle 23 verbunden werden, wobei die Schaltkupplung SE-A alternierend auch ein Loszahnrad 45 des Zahnradsatzes RE-8 an die Eingangswelle 23 kuppelt;
- das Festzahnrad 46 des Zahnradsatzes RE-8 ist analog zum Festzahnrad 42 des RE-7 auf der Hohlwelle 44 angeordnet, wobei die Hohlwelle 44 über eine Einfach-Schaltkupplung SE-E mit der Abtriebswelle 24 verbindbar ist.

Die Schaltkupplungen SE-C, SE-F, SE-D, SE-B und SE-A können als bekannte und bei Schaltgetrieben übliche Doppel-Synchronkupplungen (mit einer Stellung deren Schaltmuffen auf der Zeichnung Fig. 1 nach links (li) oder nach rechts (re) und die Schaltkupplung SE-E als eine Einfach-Synchronkupplung (Schaltstellung li) ausgeführt sein, die elektronisch gesteuert über entsprechende elektrisch/hydraulisch betätigte Aktoren jeweils aus einer Neutralstellung (wie gezeichnet) geschaltet werden.

Die Kupplungen K1, K2 können hydraulisch lastschaltbare Lamellenkupplungen sein, die alternierend betätigt das Teilgetriebe A oder B nach entsprechender Vorwahl der Gänge in den Antriebskraftfluss einkuppeln.

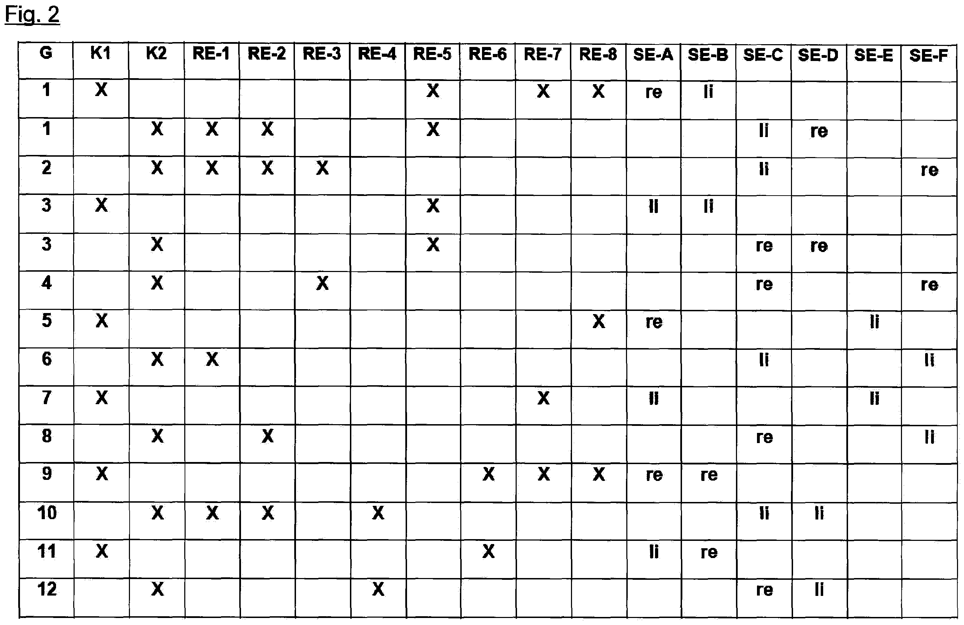

Die Vorwärtsgänge 1 bis 12 (ein gegebenenfalls erforderlicher Rückwärtsgang ist der Einfachheit halber nicht eingezeichnet) können gemäß der Schaltmatrix Fig. 2 geschaltet werden, wobei der jeweils geschaltete Gang (G) 1 bis 12 in der linken Spalte der Matrix angegeben ist. Die Kreuzchen (X) bezeichnen die in den jeweiligen Kraftfluss eingebundenen Zahnradsätze RE1 bis RE8 und die Bezeichnung (li) oder (re) die Schaltstellungen der jeweiligen Schaltkupplungen SE. Zu bemerken ist, dass die Gänge 1 und 3 in der Spalte G zweifach angegeben sind, da diese wahlweise über das Teilgetriebe B (Kupplung K1) oder das Teilgetriebe A (Kupplung K2) schaltbar sind.

Die reguläre Schaltfolge kann dementsprechend sein 1 - 2 - 3 - 4 - 5 ff., wobei der 1. Gang über die Kupplung K1 (Teilgetriebe B) und die weiteren Gänge durch alternierendes Schließen der Kupplungen K2, K1, K2, etc. erfolgt. In dem Teilgetriebe mit der offenen Kupplung kann wie bekannt der nächste Gang vorgewählt werden, wodurch durch Umschalten der Kupplungen K1, K2 ohne Unterbrechung der Zugkraft geschaltet werden kann.

In der modifizierten Schaltfolge kann der 2. Gang und gegebenenfalls auch der 4. Gang ohne Unterbrechung der Zugkraft übersprungen werden, wobei der Kraftfluss im 1.Gang über die Kupplung K1 oder K2 (Teilgetriebe A oder B) bei entsprechender Einbindung der Zahnradsätze RE-1 bis RE-8 und Stellung der Schaltkupplungen SE (siehe Matrix) gesteuert wird. Daraus resultiert, dass jeweils der 3. Gang und gegebenenfalls der 5.Gang bereits vorgewählt und durch Wechsel der lastschaltbaren Kupplung ohne Unterbrechung der Zugkraft aktivierbar ist.

Steuerbar sind somit neben der regulären Schaltfolge des Doppelkupplungsgetriebes 20 die modifizierten Schaltfolgen 1 - 3 - 4 - 5 - 6 ff. in der Folge K2, K1, K2, K1, K2 ff. oder 1 - 3 - 5 - 6, ff., in der Folge K1, K2, K1, K2 ff., wobei die Schaltfolgen abhängig von Betriebsdaten und Fahrparametern des Kraftfahrzeugs über eine elektronische Getriebesteuerung vorgebbar und/oder manuell einstellbar sind.

Wie aus Schaltmatrix der Fig. 2 weiter hervorgeht, sind die Vorwärtsgänge 3 bis 8 sowie 11 und 12 als Direktgänge ausgelegt, die jeweils genau eine in den Momentenfluss geschaltete Radebene aufweisen. Im Unterschied dazu sind die Vorwärtsgänge 1, 2 und 9 sowie 10 nicht als Direktgänge, sondern als Verwindungsgänge realisiert, in denen mittels der Schaltelemente SE-A bis SE-G jeweils genau drei Radebenen in Reihe kombiniert in den Momentenfluss geschaltet sind. Beispielhaft sind im ersten Vorwärtsgang (Verwindungsgang) die achte, siebte und fünfte Radebene RE-8, RE-7 und RE-5 im Momentenfluss geschaltet. Im 2. Vorwärtsgang (Verwindungsgang) sind die erste, zweite und dritte Radebene RE-1, RE-2, RE-3 in den Momentenfluss geschaltet. Im 9. Vorwärtsgang (Verwindungsgang) sind die achte, siebte und sechste Radebene RE-8, RE-7, RE-6 geschaltet. Bei eingelegtem 10. Vorwärtsgang (Verwindungsgang) sind die erste, zweite und vierte Radebene RE-1, RE-2 und RE-4 geschaltet.

Zur Bereitstellung des jeweiligen Verwindungs-Vorwärtsgangs 1, 2 und 9 sowie 10 sind die zu schaltenden drei Radebenen entweder komplett dem ersten Teilgetriebe A oder komplett dem zweiten Teilgetriebe B zugeordnet. Das heißt, dass bei einem geschalteten Verwindungs-Vorwärtsgang nur das die drei Verwindungs-Radebenen aufweisende Teilgetriebe im Momentenfluss des eingelegten Ganges eingebunden ist, während das andere Teilgetriebe vollständig vom Momentenfluss abgekoppelt ist.

Zur Bildung eines Rückwärtsganges R ist achsparallel zu den Eingangswellen 22, 23 und der Abtriebswelle 24 eine die beide Teilgetriebe A, B überbrückende Rückwärtsgangwelle 50 im nicht dargestellten Getriebegehäuse des Doppelkupplungsgetriebes gelagert. Die Rückwärtsgangwelle 50 trägt zwei Umkehrzahnräder 51, 53, von denen das erste Umkehrzahnrad 51 mit dem antriebsseitigen Zahnrad 30 der zweiten Radebene RE-2 und das zweite Umkehrzahnrad 53 mit dem antriebsseitigen Zahnrad 37 der fünften Radebene RE-5 kämmt.

Das mit der zweiten Radebene RE-2 des Teilgetriebes A zusammenwirkende erste Umkehrzahnrad 51 ist als Loszahnrad ausgeführt und mittels eines einseitig schaltbaren Schaltelements SE-H an die Rückwärtsgangwelle 50 ankuppelbar. Das mit der fünften Radebene RE-5 zusammenwirkende Umkehrzahnrad 53 ist dagegen als ein Festzahnrad ausgeführt.

Der Rückwärtsgang R wird dadurch aktiviert, dass das von der ersten Eingangswelle 22 getragene Schaltelement SE-C in der Fig. 1 nach links auf das antriebsseitige Zahnrad 30 der ersten Radebene RE-1 geschaltet wird. Zudem wird das Schaltelement SE-H nach links auf das erste Umkehrzahnrad 51 geschaltet und wird das abtriebsseitige Zahnrad 38 der Zwischen-Radebene RE-5 über das Schaltelement SE-G mit der Abtriebswelle 24 gekuppelt. Der Rückwärtsgang R ist daher ein Verwindungsgang, wobei der Momentenfluss bei geschlossener Trennkupplung K2 über die hohle Eingangswelle 22 und das antriebsseitige Zahnrad 30 der zweiten Radebene RE-2 auf das erste Umkehrzahnrad 51 und weitere über die Rückwärtsgangwelle 50 sowie das zweite Umkehrzahnrad 53 auf das abtriebsseitige Zahnrad 38 der Zwischen-Radebene RE-5 verläuft.

## Patentansprüche

1. Doppelkupplungsgetriebe für ein Kraftfahrzeug, mit über Schaltelemente schaltbaren Zahnradsätzen, die genau acht in Axialrichtung von der Eingangs- zur Ausgangsseite des Doppelkupplungsgetriebes in der Reihenfolge erste bis achte hintereinander angeordnete Radebenen (RE-1 bis RE-8) bilden, die jeweils einem ersten Teilgetriebe (A) und einem zweiten Teilgetriebe (B) zugeordnet sind, von denen das erste Teilgetriebe (A) eine erste Eingangswelle (22) und das zweite Teilgetriebe (B) eine zweite Eingangswelle (23) aufweist, und beide Teilgetriebe (A, B) eine gemeinsame Abtriebswelle (24) aufweisen, wobei die zueinander koaxialen Eingangswellen (22, 23) über je eine lastschaltbare Kupplung (K1, K2) alternierend aktivierbar sind, und dem ersten Teilgetriebe (A) die geraden Vorwärtsgänge (2, 4, 6, 8, 10, 12) sowie dem zweiten Teilgetriebe (B) die ungeraden Vorwärtsgänge (1, 3, 5, 7, 9, 11) zugeordnet sind, die bei einer Gangschaltung über die Schaltelemente (SE-A bis SE-G) schaltbar sind, wobei das Doppelkupplungsgetriebe eine entweder auf das erste Teilgetriebe (A) oder auf das zweite Teilgetriebe (B) schaltbare Zwischen-Radebene (RE-5) aufweist, **dadurch gekennzeichnet, dass** ein Rückwärtsgang (R) durch eine zu den Eingangswellen (22, 23) achsparallele Rückwärtsgangwelle (50) gebildet ist, auf der zwei Umkehrzahnräder (51, 53) vorgesehen sind, von denen das erste Umkehrzahnrad (51) mit einer Radebene (RE-2) des ersten Teilgetriebes (A) kuppelbar ist, und das zweite Umkehrzahnrad (53) mit der Zwischen-Radebene (RE-5) kuppelbar ist, und dass bei geschaltetem Rückwärtsgang (R) ein Momentenfluss von der mit dem ersten Umkehrzahnrad (51) gekuppelten Radebene (RE-2) des ersten Teilgetriebes (A) über das erste Umkehrzahnrad (51), die Rückwärtsgangwelle (50) und das zweite Umkehrzahnrad (53) auf die Zwischen-Radebene (RE-5) und weiter auf die Abtriebswelle (24) übertragbar ist, dass das erste Umkehrzahnrad (51) mit einem auf der ersten Eingangswelle (22) gelagerten antriebsseitigen Zahnrad (30) der Radebene (RE-2) des ersten Teilgetriebes (A) kämmt, und das zweite Umkehrzahnrad (53) mit einem, auf der Abtriebswelle (24) gelagerten abtriebsseitigen Zahnrad (38) der Zwischen-Radebene (RE-5) kämmt, und dass das antriebsseitige Zahnrad (30) der mit dem ersten Umkehrzahnrad (51) gekuppelten Radebene (RE-2) drehfest auf einer antriebsseitigen Hohlwelle (31) des ersten Teilgetriebes (A) angeordnet ist, die koaxial auf der ersten Eingangswelle (22) drehgelagert ist, und dass die antriebsseitige Hohlwelle (31) des ersten Teilgetriebes (A) über ein erstes Schaltelement (SE-C) mit der ersten Eingangswelle (22) verbindbar ist, und dass das abtriebsseitige Zahnrad (38) der Zwischen-Radebene (RE-5) als ein Loszahnrad auf der Abtriebswelle (24) gelagert ist und über ein siebtes Schaltelement (SE-G) trieblich mit der Abtriebswelle (24) verbindbar ist, so dass durch Schalten der ersten und siebten Schaltelemente (SE-C, SE-G) und des Rückwärtsgang-Schaltelements (SE-H) der Rückwärtsgang (R) eingelegt ist.

2. Doppelkupplungsgetriebe nach Anspruch 1, **dadurch gekennzeichnet, dass** das erste Umkehrzahnrad (51) als ein Loszahnrad auf der Rückwärtsgangwelle (50) drehgelagert ist und mit einem Rückwärtsgang-Schaltelement (SE-H) mit der Rückwärtsgangwelle (50) kuppelbar ist, und dass das zweite Umkehrzahnrad (53) als ein Festzahnrad auf der Rückwärtsgangwelle (50) angeordnet ist.

3. Doppelkupplungsgetriebe nach einem der vorhergehenden Ansprüche, **dadurch gekennzeichnet, dass** die Zwischen-Radebene (RE-5) in der Axialrichtung unmittelbar an das erste Teilgetriebe (A) angrenzt, und dass die Zwischen-Radebene (RE-5) mittels eines dritten Schaltelements (SE-D) entweder mit dem ersten Teilgetriebe (A) oder mittels eines vierten Schaltelements (SE-B) mit dem zweiten Teilgetriebe (B) trieblich verbindbar ist.

4. Doppelkupplungsgetriebe nach einem der vorhergehenden Ansprüche, **dadurch gekennzeichnet, dass** die auf beide Teilgetriebe (A, B) schaltbare Zwischen-Radebene (RE-5) mit ihrem antriebsseitigen Zahnrad (37) auf der zweiten Eingangswelle (23) lose gelagert ist, und dass das antriebsseitige Zahnrad (37) der auf beide Teilgetriebe (A, B) schaltbaren Zwischen-Radebene (RE-5) mittels des dritten Schaltelements (SE-D) mit der antriebsseitigen Hohlwelle (31) des ersten Teilgetriebes (A) trieblich verbindbar ist.

5. Doppelkupplungsgetriebe nach Anspruch 4, **dadurch gekennzeichnet, dass** das antriebsseitige Zahnrad (37) der Zwischen-Radebene (RE-5) mit dem vierten Schaltelement (SE-B) mit dem zweiten Teilgetriebe (B) trieblich verbindbar ist.

6. Doppelkupplungsgetriebe nach einem der vorhergehenden Ansprüche, **dadurch gekennzeichnet, dass** die Abtriebswelle (24) achsparallel zu den Eingangswellen (22, 23) und zur Rückwärtsgangwelle (50) angeordnet ist.

## Claims

1. Dual clutch transmission for a motor vehicle with gearwheels switchable via switching elements, which form exactly eight gear stages (RE-1 to RE-8) arranged behind one another in axial direction from the input side to the output side of the dual clutch transmission in the sequence from first to eighth, which are respectively assigned to a first sub-transmission (A) and to a second sub-transmission (B), of which the first sub-transmission (A) is provided with a first input shaft (22) and the second sub-transmission (B) is provided with a second input shaft (23), and both sub-transmissions (A, B) are provided with a joint output shaft (24), wherein the input shafts (22, 23) arranged coaxially to each other can be alternately activated by a power-switchable coupling (K1, K2), and the even forward gears (2, 4, 6, 8, 10, 12) are assigned to the first sub-transmission (A) and the odd forward gears (1, 3, 5, 7, 9, 11) are assigned to the second sub-transmission (B), which can be shifted during a gear shift by means of the switching elements (SE-A to SE-G), wherein the dual clutch transmission is provided with an intermediate gear stage (RE-5) shiftable either to the first sub-transmission (A) or to the second sub-transmission (B), **characterised in that** a reverse gear (R) is formed by a reverse gear shaft (50) which is axially parallel to the input shafts (22, 23) on which two reverse gearwheels (51, 53) are provided, of which the first reverse gearwheel (51) can be coupled to a gear stage (RE-2) of the first sub-transmission (A), and the second reverse gear (53) can be coupled to the intermediate gear stage (RE-5), and **in that** with an engaged reverse gear (R) a torque flow can thus be transmitted from the gear stage (RE-2) of the first sub-transmission (A) coupled to the first reverse gearwheel (51) via the first reverse gearwheel (51), the reverse gear shaft (50) and the second reverse gearwheel (53) to the intermediate gear stage (RE-5) and further to the output shaft (24), **in that** the first reverse gearwheel (51) meshes with a drive-side gearwheel (30) of the gear stage (RE-2) of the first sub-transmission (A) mounted on the first input shaft (22), and the second reverse gearwheel (53) meshes with an output side gearwheel (38) of the intermediate gear stage (RE-5) mounted on the output shaft (24), and **in that** the drive-side gearwheel (30) of the gear stage (RE-2) coupled to the first reverse gear wheel (51) is arranged non-rotatably on a drive-side hollow shaft (31) of the first sub-transmission (A), which is coaxially rotatably mounted on the first input shaft (22), and **in that** the drive-side hollow shaft (31) of the first sub-transmission (A) can be connected via a first switching element (SE-C) to the first input shaft (22), and **in that** the driven side gearwheel (38) of the intermediate gear stage (RE-5) is mounted as a loose gearwheel on the output shaft (24) and can be drivingly connected by a seventh switching element (SE-G) to the output shaft (24) so that by shifting the first and seventh switching elements (SE-C, SE-G) and the reverse gear switching element (SE-H) the reverse gear (R) is engaged.

2. Dual clutch transmission according to claim 1, **characterised in that** the first reverse gearwheel (51) is rotatably mounted as a loose gearwheel on the reverse gear shaft (50) and can be coupled by a reverse gear switching element (SE-H) to the reverse gear shaft (50), and **in that** the second reverse gearwheel (53) is arranged as a fixed gearwheel on the reverse gear shaft (50).

3. Dual clutch transmission according to any of the preceding claims, **characterised in that** the intermediate gear stage (RE-5) in axial direction is directly adjacent to the first sub-transmission (A), and **in that** the intermediate gear stage (RE-5) can be drivingly connected by means of third switching element (SE-D) either to the first sub-transmission (A) or by means of a fourth switching element (SE-B) to the second sub-transmission (B).

4. Dual clutch transmission according to any of the preceding claims, **characterised in that** the intermediate gear stage (RE-5), which can be shifted to both sub-transmissions (A, B), is loosely mounted with its drive-side gearwheel (37) on the second input shaft (23), and **in that** the drive-side gearwheel (37) of the intermediate gear stage (RE-5) which can be shifted to both sub-transmissions (A, B) can be drivingly connected by means of the third switching element (SE-D) to the drive-side hollow shaft (31) of the first sub-transmission (A).

5. Dual clutch transmission according to claim 4, **characterised in that** the drive-side gearwheel (37) of the intermediate gear stage (RE-5) can be drivingly connected by the fourth switching element (SE-B) to the second sub-transmission (B).

6. Dual clutch transmission according to any of the preceding claims, **characterised in that** the output shaft (24) is arranged axially parallel to the input shafts (22, 23) and to the reverse gear shaft (50).

## Revendications

1. Transmission à double embrayage pour un véhicule automobile, avec des jeux de roues dentées qui peuvent être commutés par l'intermédiaire d'éléments de commutation et qui forment exactement huit plans de roue (RE-1 à RE-8) agencés les uns derrière les autres dans l'ordre du premier au huitième dans la direction axiale du côté entrée au côté sortie de la transmission à double embrayage, lesquels plans de roue sont associés respectivement à une première transmission partielle (A) et à une deuxième transmission partielle (B), laquelle première transmission partielle (A) comporte un premier arbre d'entrée (22) et laquelle deuxième transmission partielle (B) comporte un deuxième arbre d'entrée (23) et les deux transmissions partielles (A, B) comportent un arbre de sortie (24) commun, dans laquelle les arbres d'entrée (22, 23) coaxiaux peuvent être activés alternativement par l'intermédiaire à chaque fois d'une liaison (K1, K2) commutable en charge et les rapports de marche avant pairs (2, 4, 6, 8, 10, 12) sont associés à la première transmission partielle (A) et les rapports de marche avant impairs (1, 3, 5, 7, 9, 11) sont associés à la deuxième transmission partielle (B), lesquels rapports peuvent être commutés lors d'un changement de rapport par l'intermédiaire des éléments de commutation (SE-A à SE-G), laquelle transmission à double embrayage comporte un plan de roue intermédiaire (RE-5) commutable soit sur la première transmission partielle (A) soit sur la deuxième transmission partielle (B), **caractérisée en ce qu'**un rapport de marche arrière (R) est formé par un arbre de rapport de marche arrière (50) dont l'axe est parallèle à celui des arbres d'entrée (22, 23), deux roues dentées inverseuses (51, 53) sont prévues sur ledit arbre de rapport de marche arrière, dont la première roue dentée inverseuse (51) peut être couplée à un plan de roue (RE-2) de la première transmission partielle (A) et la deuxième roue dentée inverseuse (53) peut être couplée au plan de roue intermédiaire (RE-5), et **en ce que**, lorsque le rapport de marche arrière (R) est commuté, un flux de couple peut être transmis par le plan de roue (RE-2), couplé à la première roue dentée inverseuse (51), de la première transmission partielle (A), par l'intermédiaire de la première roue dentée inverseuse (51), de l'arbre de rapport de marche arrière (50) et de la deuxième roue dentée inverseuse (53), au plan de roue intermédiaire (RE-5) et plus loin à l'arbre de sortie (24), **en ce que** la première roue dentée inverseuse (51) s'engrène avec une roue dentée côté entraînement (30), montée sur le premier arbre d'entrée (22), du plan de roue (RE-2) de la première transmission partielle (A) et la deuxième roue dentée inverseuse (53) s'engrène avec une roue dentée côté sortie (38), montée sur le premier arbre de sortie (24), du plan de roue intermédiaire (RE-5), et **en ce que** la roue dentée côté entraînement (30) du plan de roue (RE-2) couplé à la première roue dentée inverseuse (51) est agencée de manière solidaire en rotation sur un arbre creux côté entraînement (31) de la première transmission partielle (A), lequel arbre creux est monté de façon coaxiale sur le premier arbre d'entrée (22), et **en ce que** l'arbre creux côté entraînement (31) de la première transmission partielle (A) peut être relié par l'intermédiaire d'un premier élément de commutation (SE-C) au premier arbre d'entrée (22), et **en ce que** la roue dentée côté sortie (38) du plan de roue intermédiaire (RE-5) est montée en rotation comme une roue dentée indépendante sur l'arbre de sortie (24) et peut être reliée en entraînement à l'arbre de sortie (24) par l'intermédiaire d'un septième élément de commutation (SE-G) de telle sorte que, par la commutation des premier et septième éléments de commutation (SE-C, SE-G) et de l'élément de commutation de rapport de marche arrière (SE-H), le rapport de marche arrière (R) est passé.

2. Transmission à double embrayage selon la revendication 1, **caractérisée en ce que** la première roue dentée inverseuse (51) est montée en rotation comme une roue dentée indépendante sur l'arbre de rapport de marche arrière (50) et peut être couplée à l'arbre de rapport de marche arrière (50) avec un élément de commutation de rapport de marche arrière (SE-H) et **en ce que** la deuxième roue dentée inverseuse (53) est agencée comme une roue dentée fixe sur l'arbre de rapport de marche arrière (50).

3. Transmission à double embrayage selon l'une quelconque des revendications précédentes, **caractérisée en ce que** le plan de roue intermédiaire (RE-5) est directement adjacent en direction axiale à la première transmission partielle (A) et **en ce que** le plan de roue intermédiaire (RE-5) peut être relié en entraînement au moyen d'un troisième élément de commutation (SE-D) soit à la première transmission partielle (A) soit au moyen d'un quatrième élément de commutation (SE-B) à la deuxième transmission partielle (B).

4. Transmission à double embrayage selon l'une quelconque des revendications précédentes, **caractérisée en ce que** le plan de roue intermédiaire (RE-5) pouvant être commuté sur les deux transmissions partielles (A, B) est monté indépendamment sur le deuxième arbre d'entrée (23) avec sa roue dentée côté entraînement (37) et **en ce que** la roue dentée côté entraînement (37) du plan de roue intermédiaire (RE-5) pouvant être commuté sur les deux transmissions partielles (A, B) peut être reliée en entraînement à l'arbre creux côté entraînement (31) de la première transmission partielle (A) au moyen du troisième élément de commutation (SE-D).

5. Transmission à double embrayage selon la revendication 4, **caractérisée en ce que** la roue dentée côté entraînement (37) du plan de roue intermédiaire (RE-5) peut être reliée en entraînement à la deuxième transmission partielle (B) avec le quatrième élément de commutation (SE-B).

6. Transmission à double embrayage selon l'une quelconque des revendications précédentes, **caractérisée en ce que** l'arbre de sortie (24) est agencé parallèlement aux axes des arbres d'entrée (22, 23) et de l'arbre de rapport de marche arrière (50).
